# EUROPÄISCHE PATENTSCHRIFT

(11) **EP 1 128 947 B1**
(45) Veröffentlichungstag und Bekanntmachung des Hinweises auf die Patenterteilung: **05.06.2002**
(21) Anmeldenummer: 99971758.0
(22) Anmeldetag: 04.11.1999
(51) Int. Cl.: B29C 47/02, B43K 19/16, C08L 97/00

(54) **VERFAHREN ZUR HERSTELLUNG EINES STABFÖRMIGEN VERBUNDKÖRPERS SOWIE STABFÖRMIGER VERBUNDKÖRPER**
METHOD FOR PRODUCING A ROD-SHAPED COMPOSITE PART AND ROD-SHAPED COMPOSITE PART
PROCEDE DE PRODUCTION D'UN CORPS COMPOSITE SOUS FORME DE BARRE, ET CORPS COMPOSITE SOUS FORME DE BARRE

(30) Priorität: 11.11.1998 DE 19852066
(43) Veröffentlichungstag der Anmeldung: 05.09.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: ECKL, Wilhelm, D-76133 Karlsruhe (DE); NÄGELE, Helmut, D-76327 Pfinztal (DE); PFITZER, Jürgen, D-76327 Pfinztal (DE); EISENREICH, Norbert, D-76327 Pfinztal (DE); EYERER, Peter, D-76228 Karlsruhe (DE); ELSNER, Peter, D-76327 Pfinztal (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9908435
(87) Internationale Veröffentlichungsnummer: WO0027611

(56) Entgegenhaltungen:
- WO-A-91/11335
- WO-A-98/35800
- GB-A- 420 368
- US-A- 5 736 209

## Beschreibung

Die Erfindung betrifft ein Verfahren zur Herstellung eines im wesentlichen stabförmigen Verbundkörpers aus einer von wenigstens einem Polymer ummantelten Seele, indem das Polymer plastifiziert auf die laufende Seele aufextrudiert wird.

Die Erfindung betrifft ferner einen stabförmigen Verbundkörper aus einer von wenigstens einem Polymer ummantelten Seele gemäß dem Oberbegriff des Patentanspruchs.

Derartige Verbundkörper sind z.B. als Schreib- und Malstifte, wie Blei- oder Buntstifte, und als Stifte für die dekorative Kosmetik bekannt. Hier wird die Seele von einer Mine gebildet, die in der Regel mit Massivholz ummantelt ist. Zur Herstellung solcher Stifte werden aus Holzrohlingen Halbschalen geformt, in die Halbschalen jeweils eine Nut zur Aufnahme der Mine gefräst, die Mine in eine der Halbschalen eingebracht und die Halbschalen anschließend verklebt und gegebenenfalls lackiert. Dieses Verfahren ist aufgrund der vielen Verfahrensschritte einerseits aufwendig und teuer, andererseits entsteht bei diesem Verfahren durch spanende Bearbeitung eine große Menge an hochwertigem Holzabfall.

Es sind weiterhin Bleistifte bekannt, bei denen die Ummantelung aus Holz durch synthetische Polymere, wie Kunstharze, ersetzt ist. Die Herstellung kann in einem Extrusionsprozeß und damit wesentlich einfacher erfolgen, doch besitzen synthetische Polymere bekanntermaßen eine ungünste Ökobilanz. Die Abfallverwertung ist wegen der fehlenden Sortenreinheit nur durch Verbrennung möglich, wobei bei der Verbrennung synthetischer Polymere unerwünschte CO₂-Emissionen entstehen.

Ein weiteres Problem bei der Verwendung synthetischer Polymere insbesondere für Blei- und Buntstifte stellen die verwendeten Weichmacher dar, mit denen die Polymere versetzt werden müssen, um sie durch Extrusion verarbeiten zu können und ihre Werkstoffeigenschaften zu verbessern. Die meisten Vertreter der gegenwärtig verwendeten Weichmacher, wie Phthalate, Phosphate oder Adipate, sind gesundheitsschädlich oder gar toxisch; darüber hinaus stehen insbesondere die am häufigsten verwendeten Phthalate im Verdacht endokrin zu wirken. Das gesundheitliche Gefährdungspotential insbesondere für Kinder, die zum Kauen an Schreibstiften neigen, liegt auf der Hand, da sich Weichmacher generell an Luft und verflüchtigen, sich insbesondere aber in Speichel leicht aus Kunststoffen herauslösen und beim Kauen an derartigen Stiften aufgenommen werden.

Aus den vorgenannten Gründen ergibt sich der Wunsch, einen größtmöglichen Teil der synthetischen Polymere generell durch umweltfreundlichere Stoffe zu substituieren. So ist es bekannt, (WO 91/11335 A), den Schaft eines Schreibstiftes überwiegend aus Holzschliff oder Holzmehl, also feinpartikulären Holzabfällen, oder aus Papiermache unter Zusatz von Holz-, Knochenleim oder Dispersionskleber herzustellen, indem diese Masse durch Spritzgießen oder Extrudieren auf die Mine aufgebracht wird. Die vorgeschlagenen Naturleime müssen in erheblicher Menge zugesetzt werden, um einerseits eine spritzgieß- oder extrusionsfähige Masse zu erhalten, andererseits die für Schreibstifte entscheidende Eigenschaft einer guten Biege- und Bruchfestigkeit zu gewährleisten. Die eingesetzten Naturleime sind nur bedingt wasserfest. Es ist deshalb weiterhin vorgesehen, den Schaft mit einem Überzug aus Kunststoff, Gummi oder Papier zu versehen.

Die GB 420 368 beschreibt ein Verfahren zur Herstellung von Bleistiftschäften zur Aufnahme einer Bleistiftmine, indem Holzfasern in eine Celluloselösung eindispergiert, ein Teil des Lösungsmittels unter Bildung einer pastösen Matrix verdampft und diese zu dem Bleistiftschaft geformt wird. Der erhaltene Bleistift besteht weitgehend aus Naturstoffen, doch ist das Herstellungsverfahren aufwendig und teuer.

Der US 5 736 209 A ist ein Verfahren zur Herstellung von Platten aus einer faserverstärkten Stärkematrix entnehmbar, indem eine wäßrige Mischung aus Stärke, Celluloseether und Fasern bzw. Füllstoffen mittels heißer Walzen kalandriert wird. Anschließend werden die Platten getrocknet und je nach Verwendungszweck weiterverarbeitet, z. B. zugeschnitten, gefaltet, perforiert oder dergleichen. Die Platten dienen vornehmlich als Verpackung für Speisen und Getränke.

Schließlich sind Werkstoffe auf der Basis des natürlichen Polymers Lignin bekannt. Die WO 98/35800 A1 beschreibt ein Verfahren zur Herstellung von Komposit-Partikeln aus Lignin und Cellulose, wobei wasserunlösliches Lignin mit Lignocellulose unter erhöhtem Druck und erhöhter Temperatur in Kontakt gebracht wird.

Der Erfindung liegt die Aufgabe zugrunde, ein Verfahren zur Herstellung eines im wesentlichen stabförmigen Verbundkörpers, bei dem ein Polymer plastifiziert auf eine laufende Seele aufextrudiert wird, vorzuschlagen, welches unter Verwendung verfügbarer Rohstoffe zu einem umweltfreundlichen Erzeugnis führt. Sie ist ferner auf einen mittels eines derartigen Verfahrens hergestellten Verbundkörper gerichtet.

Der verfahrenstechnische Teil dieser Aufgabe wird erfindungsgemäß dadurch gelöst, daß wenigstens ein natürliches Polymer eingesetzt und dem plastifizierten Polymer vor oder während der Extrusion ein Gleitmittel auf der Basis nativer Öle und/oder Wachse zugesetzt wird.

Die genannte Aufgabe wird erfindungsgemäß ferner durch den stabförmigen Verbundkörper nach Patentanspruch 13 gelöst.

Zweckmäßige Weiterbildungen der Erfindung sind Gegenstand der betreffenden abhängigen Ansprüche.

Aus nachwachsenden Rohstoffen gewonnene natürliche Polymere, wie beispielsweise Lignin, Kollagen, Keratin, Casein oder Chitin, zeichnen sich durch eine hohe Umweltfreundlichkeit aus, da sie einerseits leicht und in der Regel rückstandslos biologisch abbaubar bzw. kompostierbar sind und andererseits eine ökologisch neutrale CO₂-Bilanz aufweisen, was bedeutet, daß bei der Verbrennung von natürlichen Polymeren der Atmosphäre nicht mehr CO₂ zugeführt wird als ihr beim Wachstum der Rohstoffe entzogen wurde.

Werkstoffe auf der Grundlage natürlicher Polymere bzw. durch Oxidation, Enzymbehandlung oder dgl. modifizierter natürlicher Polymere, wie Duroplaste aus Casein oder Thermoplaste aus Cellulosenitraten, -acetaten, -estern und -ethern sind bereits bekannt. Nachteilig bei vielen bekannten natürlichen Polymeren sind einerseits deren im Vergleich zu den meisten synthetischen Polymeren schlechtere Werkstoffeigenschaften, wie eine hohe Sprödigkeit, Porosität oder Hygroskopizität, wobei letztgenannte durch den Zusatz von Weichmachern noch verstärkt wird. Andererseits sind diese Polymere häufig nicht geruchsneutral. Hier schafft das erfindungsgemäß vor oder während der Extrusion zugesetzte Gleitmittel auf der Basis nativer Öle oder Wachse Abhilfe. Die Wirkungsweise der Gleitmittel entspricht einerseits derjenigen bekannter synthetischer Weichmacher, die lediglich aufgrund ihrer Lösungsbzw. Quellmitteleigenschaften ohne chemische Reaktion mit dem Polymer in physikalische Wechselwirkung treten und ein homogenes System mit diesem bilden. Dadurch verleihen sie dem natürlichen Polymer bessere physikalische Eingenschaften, z.B. eine niedrigere Schmelztemperatur, ein erhöhtes Formveränderungsvermögen, erhöhte elastische Eigenschaften, eine geringere Sprödigkeit, sowie gegebenenfalls ein erhöhtes Haftvermögen.

Im Gegensatz zu synthetischen Weichmachern auf der Basis organischer Ester bestehen native Öle und Wachse im wesentlichen aus höhermolekularen Fettsäuren bzw. Estern höhermolekularer Fettsäuren, wie Glyceride, und sind nicht oder nur wenig toxisch. Aus nachwachsenden Rohstoffen gewonnene Gleitmittel weisen weiterhin eine ökologisch neutrale CO₂-Bilanz auf. Durch den Zusatz der erfindungsgemäßen Gleitmittel wird ein Extrudat mit glatter Oberfläche erhalten. Ferner kann durch den Zusatz der nativen Öle oder Wachse die Extrusionstemperatur merklich gesenkt werden, da diese, wie bereits erwähnt, den Schmelz- bzw. den Fließübergangsbereich der Polymere absenken, so daß das Polymer bei der Verarbeitung thermisch weniger beansprucht wird. Ein mit nativen Ölen versetztes natürliches Polymer stellt einen hochwertigen, vollständig aus Naturstoffen aufgebauten Werkstoff dar, der umweltfreundlich und leicht biologisch abbaubar bzw. verrottbar ist.

Überraschenderweise hat sich gezeigt, daß insbesondere durch den Zusatz nativer Öle die unvermeidliche Geruchsemission der meisten natürlichen Polymere gedämpft wird. Wird ein Teil der nativen Öle in Form etherischer Öle zugesetzt, bewirkt dies eine weitere Verringerung der Geruchsemissionen bis hin zur vollständigen Eindämmung, indem die in vielen natürlichen Polymeren enthaltenen flüchtigen niedermolekularen Komponenten gebunden werden, so daß eine Versiegelung eines mit etherischen Ölen versetzten, aus natürlichen Polymeren bestehenden Verbundkörpers, beispielsweise mittels einer Lackierung, nicht erforderlich ist. Etherische Öle bestehen im wesentlichen aus leicht flüchtigen Alkoholen, Aldehyden, Ketonen, Estern, Lactonen, schwefel- und stickstoffhaltigen Verbindungen sowie Kohlenwasserstoffen.

In bevorzugter Ausführung werden natürliche Polymere auf der Basis von Lignin eingesetzt. Lignin ist ein hochmolekulares polyphenolisches Makromolekül, das in verholzenden Pflanzen die Räume zwischen den Zellmembranen ausfüllt und zu Holz werden läßt, wobei ein Mischkörper aus druckfestem Lignin und zugefester Cellulose entsteht. Lignin zeichnet sich durch im Vergleich mit anderen Naturpolymeren merklich bessere Werkstoffeigenschaften, wie beispielsweise einer hohen Festigkeit, Steifigkeit und Schlagzähigkeit, aus.

Lignin fällt in großen Mengen als Nebenprodukt bei der Zellstoffgewinnung an und ist somit in großen Mengen verfügbar. Hierbei entstehen beim Aufschluß von Holz Ligninsulfonsäuren als Bestandteile der Sulfitablaugen, in denen die Ligninsulfonsäuren als Phenolate ("Alkali-Lignin") gelöst sind. Durch Behandlung mit Schwefelsäure und Kohlendioxid kann die Ligninsäure ausgefällt werden.

Vorzugsweise wird aufgrund seiner hohen Verfügbarkeit Alkali-Lignin eingesetzt, das als Pulver bei der Aufarbeitung von Abwässern aus der Celluloseverarbeitung durch Verdampfen erhalten wird, oder es wird in gelöster Form, z.B. in Alkoholen, wie Glycol, eingesetzt. Das Lignin kann hierbei gegebenenfalls weitere natürliche Polymere, z.B. Proteine oder Proteinderevate, enthalten. Es kann insbesondere auch ein ligninhaltiges Naturstoffgranulat gemäß der EP 0 720 634 B1 eingesetzt werden, welches aus einer stereochemischen Modifikation durch Behandlung mit organischen Säuren, insbesondere Essigsäure, hervorgeht und thermoplastisch zu Formteilen verarbeitbar ist.

In bevorzugter Ausführung ist vorgesehen, daß native Öle auf der Basis von Raps-, Distel-, Sonnenblumen-, Hanföl oder Menthol verwendet werden, welche einerseits die Werkstoffeigenschaften des verwendeten Naturpolymers verbessern und andererseits hygienisch unbedenklich sind. Native Öle aus der vorgenannten Gruppe ermöglichen eine Absenkung der Extrusionstemperatur auf 90°C im Bereich des Einzugs und 115°C im Bereich der Austrittsdüse des Extruders.

In weiterhin bevorzugter Ausführung ist vorgesehen, daß tierische native Wachse, wie Bienenwachs, Schellackwachs, Lanolin, Walrat oder dgl. oder pflanzliche native Wachse, wie Carnaubawachs, Montanwachs, Japanwachs, Reiskeimölwachs oder dgl. verwendet werden, welche bei der Extrusionstemperatur flüssig sind. Alternativ können auch chemisch modifizierte native Wachse, wie z.B. Jojobawachse, Montanesterwachse oder Sasolwachse, verwendet werden.

Die Gleitmittel werden je nach eingesetztem Polymer vorzugsweise zwischen 1 und 15 Mass-%, insbesondere 3-10 Mass-%, bezogen auf die Masse des verwendeten Polymers zugesetzt.

Wird das erfindungsgemäße Verfahren beispielsweise zur Herstellung von Schreib-, Mal- oder Kosmetikstiften genutzt, so ist in weiterhin bevorzugter Ausführung vorgesehen, daß dem plastifizierten Polymer vor oder während der Extrusion natürliche Fasern zugesetzt werden. Die natürlichen Fasern modifizieren das natürliche Polymer dahingehend, daß es natürlich gewachsenem Holz in Optik und Haptik sehr ähnlich ist und damit den Verbraucherwünschen und -angewohnheiten entgegenkommt. Sie verbessern gleichzeitig die Möglichkeiten einer spanenden Bearbeitung z.B. beim Spitzen eines Schreib- oder Kosmetikstiftes. Insbesondere ist die Kombination von mit nativen Ölen oder Wachsen sowie Cellulosefasern versetztem Lignin aufgrund des holzähnlichen Charakters des Lignins und dem in natürlichem Holz enthaltenen Cellulosefasern kaum von Holz unterscheidbar. Als natürliche Fasern kommen neben Cellulosefasern auch Holz-, Flachs-, Sisal-, Miscanthus-, Ramie- und/oder Hanffasern in Frage. Der Verbundkörper kann, falls gewünscht, nach der Extrusion auf bekannte Weise beschichtet, beispielsweise lackiert werden.

Die durch die nativen Öle mögliche Absenkung der Extrusionstemperatur bringt den weiteren Vorteil, daß auch die zugesetzten natürlichen Fasern thermisch schonend eingearbeitet werden können. Ferner empfiehlt sich eine geringe Extrusionsgeschwindigkeit.

Das erfindungsgemäße Verfahren kann kontinuierlich oder chargenweise durchgeführt werden, wobei insbesondere eine kontinuierliche Durchführung vorgesehen ist, bei der die Seele endlos zugeführt und das plastifizierte Polymer durch Koextrusion aufextrudiert wird.

Das erfindungsgemäße Verfahren eignet sich nicht nur zur Herstellung von im wesentlichen stabförmigen Verbundkörpern in Form von Schreib-, Mal- oder Kosmetikstiften. So können auch Schnüre mit einer Textil- oder einer Drahtseele, z.B. für Wäscheleinen, oder mit einer Isolierschicht versehene Kabel hergestellt werden.

Die Erfindung betrifft schließlich einen stabförmigen Verbundkörper aus einer von wenigstens einem Polymer ummantelten Seele, insbesondere Schreib-, Mal- oder Kosmetikstift, der mittels eines Verfahrens der vorgenannten Art hergestellt ist und sich dadurch auszeichnet, daß das Polymer ein mit nativen Ölen und/oder Wachsen versetztes natürliches Polymer auf der Basis von Lignin ist. Aufgrund seines holzähnlichen Charakters und seiner thermoplastischen Verarbeitbarkeit kann das Lignin weiterhin mit natürlichen Fasern, wie Cellulosefasern, versetzt sein, so daß der Werkstoff natürlich gewachenem Holz in seiner Zusammensetzung und Oberflächenbeschaffenheit sehr ähnlich ist. Der erfindungsgemäße Verbundkörper kann auf bekannte Weise beschichtet, beispielsweise lackiert sein.

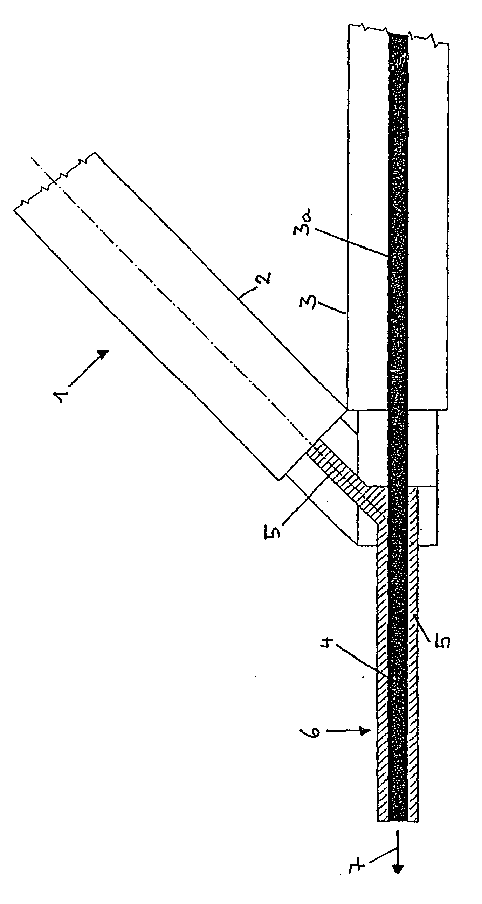

Nachstehend ist die Erfindung anhand eines Ausführungsbeispiels unter Bezugnahme auf die Zeichnung erläutert. Die einzige Figur zeigt eine schematische Darstellung der Extrusion eines plastifizierten Polymers auf eine laufende Seele mittels eines Extruders.

Der dargestellte Extruder 1 weist ein Schneckengehäuse 2 zur Plastifzierung eines mit einem Gleitmittel auf der Basis nativer Öle und/oder Wachse versetzten natürlichen Polymers 5, insbesondere Lignin, auf. Er weist weiterhin ein Gehäuseteil 3 mit einer im wesentlichen zentrischen Öffnung 3a zur Führung einer laufenden Seele 4, beispielsweise der Mine eines Schreib-, Mal- oder Kosmetikstiftes, in Richtung Pfeil 7 auf. Das Schneckengehäuse 2 kann zusätzlich (nicht dargestellte) Aufgabestellen für den Zusatz natürlicher Fasern, wie z.B. Cellulosefasern, haben.

Das mit nativen Ölen oder Wachsen versetzte plastifizierte Polymer 5 wird unter Bildung eines erfindungsgemäßen Verbundkörpers 6 kontinuierlich auf die endlos zugeführte Seele 4 aufextrudiert.

## Patentansprüche

1. Verfahren zur Herstellung eines im wesentlichen stabförmigen Verbundkörpers (6) aus einer von wenigstens einem Polymer ummantelten Seele (4), indem das Polymer plastifiziert und auf die laufende Seele (4) aufextrudiert wird, **dadurch gekennzeichnet, daß** wenigstens ein natürliches Polymer (5) eingesetzt und dem plastifizierten Polymer (5) vor oder während der Extrusion ein Gleitmittel auf der Basis nativer Öle und/oder Wachse zugesetzt wird.

2. Verfahren nach Anspruch 1, **dadurch gekennzeichnet, daß** natürliche Polymere (5) auf der Basis von Lignin eingesetzt werden.

3. Verfahren nach Anspruch 1 oder 2, **dadurch gekennzeichnet, daß** native Öle auf der Basis von Raps-, Distel-, Sonnenblumen-, Hanföl oder Menthol verwendet werden.

4. Verfahren nach Anspruch 1 oder 2, **dadurch gekennzeichnet, daß** tierische native Wachse, wie Bienenwachs, Schellackwachs, Lanolin, Walrat oder dgl., verwendet werden.

5. Verfahren nach Anspruch 1 oder 2, **dadurch gekennzeichnet, daß** pflanzliche native Wachse, wie Carnaubawachs, Montanwachs, Japanwachs, Reiskeimölwachs oder dgl., verwendet werden.

6. Verfahren nach einem der Ansprüche 1 bis 5, **dadurch gekennzeichnet, daß** zwischen 1 und 15 Mass-%, insbesondere 3 bis 10 Mass-% des Gleitmittels bezogen auf die Masse des Polymers (5) zugesetzt werden.

7. Verfahren nach einem der Ansprüche 1 bis 6, **dadurch gekennzeichnet, daß** dem plastifizierten Polymer (5) vor oder während der Extrusion natürliche Fasern zugesetzt werden.

8. Verfahren nach Anspruch 7, **dadurch gekennzeichnet, daß** dem Polymer (5) Cellulose-, Holz-, Flachs-, Sisal, Miscanthus-, Ramie- und/oder Hanffasern zugesetzt werden.

9. Verfahren nach einem der Ansprüche 1 bis 8, **dadurch gekennzeichnet, daß** der Verbundkörper (6) nach der Extrusion beschichtet, beispielsweise lackiert wird.

10. Verfahren nach einem der Ansprüche 1 bis 9, **dadurch gekennzeichnet, daß** die Seele (4) endlos zugeführt und das Polymer (5) durch Koextrusion kontinuierlich aufextrudiert wird.

11. Verfahren nach einem der Ansprüche 1 bis 10, zur Herstellung von Schreibstiften, wie Blei- oder Buntstiften.

12. Verfahren nach einem der Ansprüche 1 bis 10, zur Herstellung von Stiften für die dekorative Kosmetik.

13. Stabförmiger Verbundkörper (6) aus einer von wenigstens einem Polymer (5) ummantelten Seele (4), insbesondere Schreib-, Mal-, Kosmetikstift oder dgl., hergestellt nach einem Verfahren gemäß einem der Anspruche 1 bis 12, **dadurch gekennzeichnet, daß** das Polymer (5) ein mit nativen Ölen und/oder Wachsen versetztes natürliches Polymer (5) auf der Basis von Lignin ist.

14. Verbundkörper nach Anspruch 13, **dadurch gekennzeichnet, daß** das Polymer (5) natürliche Fasern enthält.

15. Verbundkörper nach Anspruch 13 oder 14 **dadurch gekennzeichnet, daß** er beschichtet, beispielsweise lackiert ist.

## Claims

1. Method of producing a substantially rod-shaped composite part (6) from a core (4) encased by at least one polymer, by the polymer being plasticised and extruded onto the continuous core (4), **characterised in that** at least one natural polymer (5) is used and, before or during extrusion, a lubricant based on native oils and/or waxes is added to the plasticised polymer (5).

2. Method according to claim 1, **characterised in that** natural polymers (5) based on lignin are used.

3. Method according to claim 1 or 2, **characterised in that** native oils based on rape-seed oil, thistle oil, sunflower oil, hemp-seed oil or menthol are used.

4. Method according to claim 1 or 2, **characterised in that** native animal waxes such as beeswax, shellac wax, lanolin, spermaceti wax or the like are used.

5. Method according to claim 1 or 2, **characterised in that** native vegetable waxes such as carnauba wax, montan wax, Japan wax, rice-seed oil wax or the like are used.

6. Method according to one of claims 1 to 5, **characterised in that** between 1 and 15 % by mass, especially 3 to 10 % by mass of the lubricant in relation to the mass of the polymer (5) is added.

7. Method according to one of claims 1 to 6, **characterised in that** natural fibres are added to the plasticised polymer (5) before or during extrusion.

8. Method according to claim 7, **characterised in that** cellulose fibres, wood fibres, flax fibres, sisal, miscanthus fibres, ramie fibres and/or hemp fibres are added to the polymer (5).

9. Method according to one of claims 1 to 8, **characterised in that** after extrusion, the composite part (6) is coated, for example varnished.

10. Method according to one of claims 1 to 9, **characterised in that** the core (4) is supplied continuously and the polymer (5) is extruded on continuously by means of coextrusion.

11. Method according to one of claims 1 to 10 for producing writing implements such as lead pencils or colouring pencils.

12. Method according to one of claims 1 to 10 for producing pencils for decorative cosmetics.

13. Rod-shaped composite part (6) formed from a core (4) encased by at least one polymer (5), especially a writing pencil, a colouring pencil, a cosmetic pencil or the like, produced by means of a method according to one of claims 1 to 12, **characterised in that** the polymer (5) is a natural polymer (5) which is based on lignin and to which native oils and/or waxes have been added.

14. Composite part according to claim 13, **characterised in that** the polymer (5) contains natural fibres.

15. Composite part according to claim 13 or 14, **characterised in that** it is coated, for example varnished.

## Revendications

1. Procédé de production d'un composite (6) essentiellement en forme de barre à partir d'une âme (4) enrobée d'au moins un polymère, le polymère étant plastifié et extrudé sur l'âme en déplacement (4),
**caractérisé en ce qu'**
on utilise au moins un polymère naturel (5) et on ajoute au polymère plastifié (5) avant ou pendant l'extrusion un lubrifiant à base d'huiles et/ou de cires natives.

2. Procédé selon la revendication 1,
**caractérisé en ce qu'**
on utilise des polymères naturels (5) à base de lignine.

3. Procédé selon la revendication 1 ou 2,
**caractérisé en ce qu'**
on utilise des huiles natives à base d'huile de colza, de chardon, de tournesol, de chanvre, ou de menthol.

4. Procédé selon la revendication 1 ou 2.
**caractérisé en ce qu'**
on utilise des cires natives animales, comme de la cire d'abeilles, de la cire de gomme-laque, de la lanoline, du blanc de baleine, etc.

5. Procédé selon la revendication 1 ou 2,
**caractérisé en ce qu'**
on utilise des cires natives végétales, comme la cire de carnauba, la cire de lignite, la cire du Japon, la cire d'huile de germe de riz, etc.

6. Procédé selon l'une des revendications 1 à 5,
**caractérisé en ce qu'**
on ajoute entre 1 et 15 % massique, en particulier de 3 à 10 % massique, de lubrifiant, par rapport à la masse du polymère (5).

7. Procédé selon l'une des revendications 1 à 6,
**caractérisé en ce qu'**
on ajoute des fibres naturelles au polymère plastifié (5) avant ou après l'extrusion.

8. Procédé selon la revendication 7,
**caractérisé en ce qu'**
on ajoute au polymère (5) des fibres de cellulose, de bois, de lin, de sisal, de miscanthus, de ramie et/ou de chanvre.

9. Procédé selon l'une des revendications 1 à 8,
**caractérisé en ce qu'**
on recouvre le composite (6) après l'extrusion, par exemple on le laque.

10. Procédé selon l'une des revendications 1 à 9,
**caractérisé en ce qu'**
on introduit l'âme (4) sans fin, et on extrude le polymère (5) par coextrusion de façon continue.

11. Procédé selon l'une des revendications 1 à 10, pour la production de crayons à écrire, comme des crayons à papier ou des crayons de couleur.

12. Procédé selon l'une des revendications 1 à 10, pour la production de crayons pour la cosmétique décorative.

13. Composite en forme de barre (6) constitué d'une âme (4) cnrobée d'au moins un polymère (5), en particulier un crayon à écrire, à peindre ou de cosmétique, etc, produit selon un procédé de l'une des revendications 1 à 12,
**caractérisé en ce que**
le polymère (5) est un polymère naturel (5) à base de lignine muni d'huiles et/ou cires natives.

14. Composite selon la revendication 13,
caractèrisé en ce que
le polymère (5) contient des fibres naturelles.

15. Composite selon les revendications 13 ou 14,
**caractérisé en ce qu'**
il est revêtu, par exemple laqué.
